# EUROPEAN PATENT APPLICATION

(11) **EP 0 716 813 A1**
(43) Date of publication of application: **19.06.1996**
(21) Application number: 95200755.7
(22) Date of filing: 25.03.1995
(51) Int. Cl.: A23L 1/318, A23B 4/023, A23B 4/28

(54) **Method for preparing a food product on the basis of meat, and food product prepared according to this method**

(30) Priority: 22.11.1994 BE 9401055
(71) Applicant: Meeuw, Jannick, B-8800 Roeselare (BE)
(72) Inventor: Meeuw, Jannick, B-8800 Roeselare (BE)
(74) Representative: Donné, Eddy

(57) **Abstract**

Method for preparing a food product on the basis of meat, characterized in that lamb is taken as a basis and in that said lamb is pickled.

## Description

The invention concerns a method for preparing a food product on the basis of meat, as well as a food product prepared according to this method.

In particular, it aims a method with which a new food product is obtained with a new, typical taste and smell.

To this end, the invention concerns a method for preparing a food product on the basis of meat, characterized in that lamb is taken as a basis and in that said lamb is pickled.

Thus is obtained a meat product in which the typical taste and smell of lamb is suppressed, so that this meat can be offered to a larger public because those consumers who resent the typical smell or taste of lamb now form part of the potential consumers on the one hand, and because the obtained lamb is-now also suited to be sold as cold cuts, which was not possible until now.

The invention also offers a solution to the present surplus of lamb, since in some countries, such as New-Zealand and Australia, the meat simply has to be buried sometimes for lack of sales potential. The creation of a new market segment may thus offer a solution to the over-production.

According to the most preferred embodiment, the invention also aims a method and food product, in particular a meat product, which offer one or several of the following advantages:
- a preparation in four days instead of one week to ten days as is the case with the preparation of an ordinary ham;
- no or practically no loss of weight during the preparation;
- a restriction of the salt content, such that the salty taste is not all to pronounced and the salty taste does not prevail when the food product is heated, which moreover is a considerable advantage nowadays, as consumers are aware of the disadvantages of the excessive use of salt;
- the possibility to exclude the use of moulds, which allows to save time and production space;
- a food product in which also smaller pieces of meat can be processed, so that there is no waste;
- a food product which can be entirely cut up without any residual loss.

For the method according to the invention is preferably taken a shoulder or leg of lamb from which the fat has been removed and which has possibly been boned.

The lamb can hereby be either fresh or frozen, whereby in the latter case the lamb is thawed out first.

Before the pickling, the lamb is preferably tied up, so that one compound piece is obtained, which offers the advantage, as mentioned above, that there is no residual loss.

In the first place, a cotton cord can be wound round the meat to tie it up. At a second stage, also an elastic net is preferably put around the meat so as to obtain a specific shape. This offers the above-mentioned advantage that no moulds have to be used.

In this manner is formed a homogenous mass of lamb, preferably with a weight varying from 1 to 1.5 kilogram.

According to the preferred embodiment, the pickling is carried out by injecting a brine solution in the muscles of the lamb. The quantity of injected brine solution amounts to for example 10 to 12% of the weight of the lamb.

Preferably, a brine solution is used which mainly consists of a solution of what is called an N.B.S. mixture, formed of the actual brine, nitrite and salt, in water. To this end can be used 1 to 1.4 kg per 10 litres of water, or better still, exactly 1.2 kg.

The brine solution is preferably further enriched with one or several ingredients.

For example, phosphate can be added. To this end can be used a phosphate mixture formed of sodium triphosphate (E450B) and sodium diphosphate (E450A).

Flavour enhancers and/or colour preservatives can be added to the brine solution. Use can be made to this end of the product which is available on the market under the name "Schiadit" of the company "Gewfirzmuller", which consists of salt, sugars and silicon dioxide (B551), or use can be made of any other similar composition.

In particular, 0.3 kilogram of the above-mentioned "Schiadit" or of a similar product is added to the brine solution per used quantity of 10 litres of water.

Moreover, an extra amount of colour preservatives and flavour enhancers can be added to the brine, in particular 0.03 kg of each per 10 litres of water. This additional colour preservative preferably consists of a mixture of dextrose and sodium-L-ascorbate (E301), which is available on the market under the name "Pukulus". As a flavour enhancers is preferably used a mixture of spices, sugars, silicon dioxide (B551) and salt, for example the product "Superba" of the company "Gewürzmuller".

According to the invention, preferably 0.75 litres of wine are also added to this brine solution, as well as herb water, which is preferably made on the basis of wine, 4 bay leaves, thyme, juniper-berries, pepper and clove, whereby this herb water is allowed to boil for 5 minutes and is only added to the brine after it has been cooled down. For the preparation of the herb water, preferably 1 litre of wine is used and 4 bay leaves per quantity of 10 litres of water.

It is clear that also other flavourings, colour preservatives and flavour enhancers can be used.

Preferably, exactly the ingredients as described above are added to the brine solution. However, the invention does not exclude that only a number of the above-mentioned ingredients are added to the brine solution, either or not in the same quantities, and possibly also other ingredients such as spices.

After the pickling, in particular the injection of the brine solution in the lamb, a vacuum is formed, on the one hand to lower the salt content, and on the other hand to let the meat colour well.

Preferably, the pickled meat is kept in a vacuum packaging for a certain time, for example one night, at a temperature below 10° Celsius, preferably 8°.

After the vacuum packaging has been removed, one has a basic product.

This basic product can be offered to the consumer in the obtained form, or it can be subjected to one or several additional processings such as smoking, steaming, grilling or a combination thereof.

In case the additional processings consist of a combination of smoking and steaming, the basic product is placed in a smoke room for three hours. The smoke is hereby produced by means bf a smoke emulsifier or sawdust.

Subsequently, the obtained product is put in a steamer at a temperature of 72° Celsius, whereby the temperature in the core of the lamb is maintained at 65° Celsius or less. This offers the advantage that the food product, in case it is put in an oven later on for the final preparation, remains savory. This would not be the case if a temperature of over 68° Celsius would be tolerated in the core, as is the case when steaming normal hams.

The length of time during which the basic product remains in the steamer depends on the size of the basic product and varies from 2 hours for a basic product of 1 kg to 2.5 hours for a basic product of 1.5 kg.

In case the additional processings consist of steaming followed by grilling, the basic product is first steamed in the manner as described above and then grilled for 10 minutes.

According to a special processing, the lamb is rubbed in with herbs after it has been pickled and before it is put in a vacuum and/or the lamb is put in the vacuum packaging together with a number of vegetables, such as red pepper and/or mushrooms and/or tomatoes. The lamb ham hereby absorbs the specific smell and flavour of the added ingredients.

It is clear that the method of the invention can be used for lamb with or without bones.

The invention also concerns a food product which is prepared according to the above-mentioned method.

According to the most preferred embodiment, the obtained food product will be a cold cut product, in particular lamb ham.

The present invention is by no means limited to the embodiments described by way of example; on the contrary, the above-mentioned method and the food product obtained with it can be made in all sorts of variants while still remaining within the scope of the invention.

## Claims

1. Method for preparing a food product on the basis of meat, characterized in that lamb is taken as a basis and in that said lamb is pickled.

2. Method according to claim 1, characterized in that the pickling is carried out by injecting a brine solution in the muscles of the lamb.

3. Method according to claim 2, characterized in that the quantity of injected brine solution amounts to 10 to 12% of the weight of the lamb.

4. Method according to any of the above claims, characterized in that a brine solution is used which mainly consists of a solution of what is called an N.B.S. mixture, formed of the actual brine, nitrite and salt, in water.

5. Method according to claim 4, characterized in that 1.2 kg of N.B.S. mixture is used per 10 litres of water.

6. Method according to any of the above claims, characterized in that the lamb is tied up before being pickled.

7. Method according to any of the above claims, characterized in that a brine solution is used with one or several of the following products:
- a phosphate;
- a phosphate mixture formed of sodium triphosphate and sodium diphosphate;
- a flavouring;
- a colour preservative;
- a preparation of a flavouring with a colour preservative composed of salt, sugars and B551;
- a colour preservative on the basis of dextrose and E301, called pukulus;
- a flavour enhancer;
- a flavour enhancer consisting of spices, sugars, B551 and salt;
- wine;
- herbs;
- herb water;
- herb water on the basis of wine, bay leaves, thyme, juniper-berries, pepper and clove, which has been allowed to boil for some minutes.

8. Method according to claim 7, characterized in that exactly the following products are added to the brine solution per 10 litres of water:
- 0.2 kg of phosphate mixture formed of sodium triphosphate and sodium diphosphate;
- 0.3 kg of a preparation of a flavouring with a colour preservative composed of salt, sugars and possibly B551;
- 0.03 kg of colour preservative on the basis of dextrose and E301, called pukulus;
- 0.03 kg of flavour enhancer consisting of spices, sugars, B551 and salt;
- 0.75 litres of wine;
- herb water on the basis of 1 litre of wine, 4 bay leaves, thyme, juniper-berries, pepper and clove, which has been allowed to boil for at least 5 minutes and is added to the brine after it has been cooled down.

9. Method according to any of the above claims, characterized in that the lamb is put in a vacuum after the pickling.

10. Method according to any of the above claims, characterized in that the pickled lamb is preserved in a vacuum packaging for a certain time.

11. Method according to claim 10, characterized in that, after it has been pickled and before it is put in a vacuum, the lamb is rubbed in with herbs and/or in that the lamb is put in the vacuum packaging together with red pepper and/or mushrooms and/or tomatoes.

12. Method according to any of the above claims, characterized in that, after the pickling, the food product is subjected to one or several additional processings such as smoking, steaming, grilling or a combination thereof.

13. Method according to claim 12, characterized in that the temperature in the core of the food product during the processing is limited to 65° Celsius.

14. Food product on the basis of meat, characterized in that it is prepared according to the method of any of the above claims.

15. Food product according to claim 14, characterized in that it is a cold cut product, in particular lamb ham.
